(19) Europäisches Patentamt
European Patent Office
Office européen des brevets

(11) EP 4 725 998 A1

(12) EUROPEAN PATENT APPLICATION

(43) Date of publication:
**15.04.2026 Bulletin 2026/16**

(21) Application number: **24205190.2**

(22) Date of filing: **08.10.2024**

(51) International Patent Classification (IPC):
***C09D 11/322*** *(2014.01)* ***C09D 11/326*** *(2014.01)*
***C09D 11/106*** *(2014.01)* ***C09D 11/107*** *(2014.01)*
***C09D 11/104*** *(2014.01)* ***C09D 11/40*** *(2014.01)*
***C09D 11/52*** *(2014.01)* ***C09D 11/38*** *(2014.01)*
***D06P 5/30*** *(2006.01)*

(52) Cooperative Patent Classification (CPC):
**C09D 11/322; C09D 11/104; C09D 11/106; C09D 11/107; C09D 11/326; C09D 11/38; C09D 11/40; C09D 11/54; D06P 1/228; D06P 1/44; D06P 1/5221; D06P 1/525; D06P 1/5257; D06P 1/5292; D06P 1/6136;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AGFA NV**
**2640 Mortsel (BE)**

(72) Inventors:
- **LINGIER, Sophie**
**2640 Mortsel (BE)**
- **DHANIS, Bastiaan**
**2640 Mortsel (BE)**

(74) Representative: **Lingier, Stefaan Frans L.**
**AGFA NV**
**Intellectual Property Department**
**Septestraat 27**
**2640 Mortsel (BE)**

# (54) RECORDING METHOD USING AQUEOUS INK CONTAINING INDIGO

(57) An image recording method comprising the following steps: i) applying an aqueous pre-treatment liquid onto at least a part of a recording region S of a surface of a substrate; and ii) attaching an aqueous inkjet ink onto at least a part of the recording region S, the aqueous inkjet ink comprises indigo pigment particles selected from a synthetic process or a bio-based process, a polymeric dispersant and a water-soluble organic solvent, the indigo pigment particles have an average particle size equal to 30 nm or more and equal to 1000 nm or less, the polymeric dispersant is a block co-polymer having an average molecular weight equal to 1.2 kDa or more and comprises a hydrophobic block and a hydrophilic block. An ink set containing the aqueous inkjet ink comprising indigo pigment particles selected from a bio-based process, a polymeric dispersant and a water-soluble organic solvent is also provided.

EP 4 725 998 A1

(52) Cooperative Patent Classification (CPC): (Cont.)
**D06P 1/6138; D06P 1/66; D06P 1/67341;**
**D06P 1/6735; D06P 5/002; D06P 5/22; D06P 5/30**

## Description

### Technical Field

The invention relates to the field of an inkjet based recording method using aqueous inkjet inks containing synthetic or natural indigo.

### Background Art

The primary use for indigo is as a dye for cotton yarn, mainly used in production of denim cloth suitable for blue jeans cloths.

During the conventional industrial indigo dyeing process of denim cloths, indigo, which is insoluble in water, is first reduced into its water soluble leuco-indigo form, and subsequently applied to a substrate. Textile or yarn as substrates are dipped into the leuco-indigo solution and then the resulting substrate comprising leuco-indigo incorporated therewithin, is subjected to an oxidation process, so as to result in the formation of water-insoluble indigo on top of the textile/yarn substrate.

Multiple applications of leuco-indigo are required to achieve dark shades having a high colour density, significantly increasing the time period required for dyeing and further require complex dyeing systems composed of numerous dyeing bathes (6-12 cycles) and pre-/post-treatment bathes.

In this traditional process leuco-indigo is deposited onto cotton yarns and then subjected to oxidation in air, giving rise to formation of the indigo pigment nanoparticles coating the yarns' fibres. Due to the low affinity of indigo to the cotton and low concentration of the dyeing solution, only small number of nanoparticles are formed and adsorbed onto the substrate. Multiple cycles of dipping/oxidation are done to achieve desirable depth of colour.

However, concerns about disposal of used dyes in the traditional process have led to an increasing awareness for all aspects of material sustainability. More particularly, issues such as environmental pollution caused by wastewater; waste in manufacturing; and dyeing, increase in waste disposal costs, and resource limitations are being raised. Thus, the importance of an eco-friendly dye and the dyeing process is on the rise worldwide.

WO 2024/030442 discloses an aqueous composition containing indigo pigment particles having a size of between 50 nm and 400 nm having high affinity to cotton. The application of the aqueous composition on a substrate is done via a conventional way such as dipping, spraying or coating and by further subjecting said substrate to acoustic waves suitable for inducing cavitation under appropriate conditions. These application methods do not allow to differentially colour pre-defined areas of the substrate and other areas not.

One notable alternative method to the traditional dyeing method which allows partially dying of a substrate, is the use of digital textile printing (DTP) based on inkjet printing technology, an eco-friendly dyeing process technology that uses less water and energy than the traditional dyeing methods.

DTP based on inkjet printing technology works on the "drop on demand" method that only spreads ink where it needs to be, process such as drafting, engraving, and toning is omitted, reducing wastewater and auxiliary agents used in the dyeing process. Due to its efficiency, digital ink jet printing technology has demonstrated wider possibilities over the customary textile printing.

In Fibers and Polymers (2023) 24:1309-1319, an aqueous ink containing natural indigo pigments was printed directly on a cotton cloth by means of an inkjet method. A suitable pigment particle size for achieving good jetting properties of the indigo containing ink was obtained by selectively filtering off the coarse pigment particles (above 500 nm) of the pigment dispersion after grinding. This production method of the ink has the disadvantage that the concentration of the colorant in the final ink formulation is unknown and lower than the initial concentration, leading to insufficient colour density.

The aqueous inkjet formulation in the above mentioned article is furthermore not suitable to incorporate indigo pigments originating from a microbiological process based on microorganisms. These indigo pigments, also called bio-based indigo pigments, have the advantage that the production process sustainably will lead to energy savings and waste reduction with respect to synthetic indigo pigments. Bio-based indigo pigments show a substantial higher specific surface which further makes it more difficult to obtain stable pigment dispersions in aqueous compositions containing water-soluble organic solvents such as in aqueous inkjet inks. Bio-based indigo pigments could also be seen as a bio-based alternative for cyan pigments based on copper phthalocyanines used in cyan inks making part of a CMYK ink set.

There is still a need for a dyeing method using aqueous compositions of indigo pigments that allow partially colouring an area of a substrate or image wise colouring a substrate, obtaining high colour densities of the coloured areas and wherein the compositions can contain synthetic indigo pigments and bio-based indigo pigments.

### Summary of invention

It is the objective of the present invention to provide a solution to the above stated problems. The objective has

been achieved by providing an image recording method as defined in Claim 1.

It is another embodiment of the invention to provide an ink set containing an aqueous inkjet ink as defined in Claim 11.

Other features, elements, steps, characteristics and advantages of the present invention will become more apparent from the following detailed description of preferred embodiments of the present invention. Specific embodiments of the invention are also defined in the dependent claims.

Description of embodiments

A. Aqueous ink

The aqueous ink used in the recording method of the invention comprises indigo pigment particles, a polymeric dispersant and a water-soluble organic solvent.

A.1. Indigo pigment particles

As used herein, the term 'indigo pigment particle' refers to a particle comprising between 90 to 100 wt.% of indigo, which is a compound according to general formula I

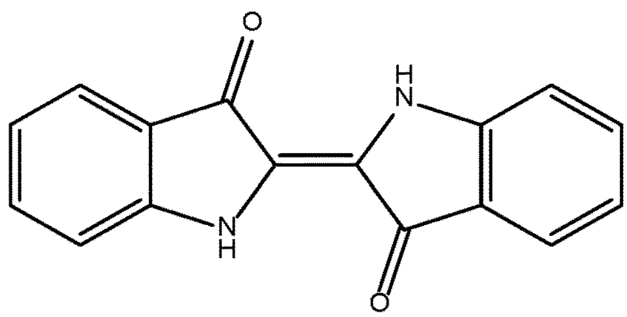

General Formula I

In an embodiment of the invention, the bulk indigo material can be produced from plant sources and is called hereafter natural indigo. In another embodiment of the invention, the bulk indigo material can be synthesized from fossil raw materials and is called hereafter synthetic indigo. In a more preferred embodiment of the invention, the bulk indigo material originates from a microbiological process based on plant material and microorganisms. The microorganisms may reproduce nearly every 20 minutes and each of them produce indigo pigment precursors. These can be separated from the microorganisms after the microbiological process and in one or more synthetic steps transformed to bio-based indigo bulk indigo material. This bulk indigo is hereafter called, bio-based indigo.

The origin of the bulk indigo material can be determined by analysing the $^{14}C$ (biocarbon) amount in the indigo material. Natural indigo comprises 100 wt.% of $^{14}C$ with respect to the total amount of C-atoms in the indigo material, synthetic indigo does not contain $^{14}C$ and the $^{14}C$ amount in bio-based indigo is higher than 0 wt.% and less than 100 wt.% with respect to the total amount of C-atoms in the indigo material.

In one of the preferred embodiments of the invention, the particles of the bulk indigo material have a BET specific surface equal to 10 $m^2$ / g or more. More particularly, the bio-based indigo particles of the bulk material have a BET specific surface equal of 20 $m^2$ / g or more, more preferably equal to 25 $m^2$ / g or more.

In some embodiments of the invention, the plurality of indigo pigment particles comprises indigo in a crystalline state. In some embodiments, the plurality of indigo pigment particles comprise indigo in an amorphous state.

In some embodiments of the invention, the indigo pigment particles in an aqueous vehicle are obtained by milling or grinding a bulk indigo material. In some embodiments of the invention, prior to milling or grinding, the bulk indigo material is mixed with the polymeric dispersant, wherein the polymeric dispersant is described below.

When the indigo pigment particles have been dispersed, the indigo pigment particles in the aqueous ink of the invention have preferably an average particle size equal to 30 nm or more and equal to 1000 nm or less, preferably equal to 30 nm or more and equal to 500 nm or less. If the average particle size is below this range, stable aqueous compositions are difficult to be obtained upon storage. If the average particle size is above the above range, the aqueous composition cannot be reliably jetted by an inkjet printhead because the nozzles of the printhead tend to clog during jetting.

A.2. Polymeric dispersant

The aqueous ink used the image recording method of the invention contains a polymeric dispersant. The polymeric dispersant keeps the indigo pigment particles dispersed in the aqueous vehicle of the aqueous inkjet ink.

The polymeric dispersant is preferably a block co-polymer having an average molecular weight equal to 1.2 kDa or more and comprising a hydrophobic block and a hydrophilic block, the hydrophobic block is selected from the group consisting of (methyl)styrene, lignin, vinyl pyridine, tris (1-phenylethyl)phenyl-group, arylethylphenyl-group, acrylate-based group, methyl (meth)acrylate, n-butyl (meth)acrylate, lauryl (meth)acrylate, myristyl (meth)acrylate , the hydrophilic block is selected from the group consisting of ethylene glycol, propylene glycol, (meth)acrylic acid, polyethyleneoxy functional (meth)acrylate, sulfonic acid, sulfate, salts of carboxylic acid, polyoxyethylene ethers of carboxylic acid, alkylphenol alkoxylate, sulphonate, phosphonate. etc.

Suitable commercially available polymeric dispersants are: Tego series of Evonik (such as Tego 655), Dispex and Efka series of BASF (such as Dispex Ultra 4575, Dispex Ultra 4290, Efka 4585, Efka FA4671), Triton series of DOW, Edaplan series of Munzig, DISPERBYK and BYKJET series of BYK (such DISPERBYK 2015, BYKJET 9151), Solsperse series of Lubrizol (such as Solsperse 1700, Solsperse 20000)

Preferably the weight ratio between the polymeric dispersant and the indigo pigment particles within the composition is from 2:1 to 0.001: 1, more preferably from 2:1 to 0.01:1. If the ratio is below or above the above mentioned ranges, stable aqueous inkjet inks cannot be obtained. In some embodiments, a weight ratio between the plurality of indigo nanoparticles and the dispersant within the composition is between 0.5: 1 and 0.05:1

In the present invention, the indigo pigment is preferably present in a pigment polymer composite particle dispersion in water or in the form of an indigo pigment-containing crosslinked polymer particle. The "indigo pigment polymer composite particle " as used herein may mean the configuration in which the indigo pigment is enclosed or encapsulated by a polymeric dispersant which preferably contains an acid group, and which is crosslinked, the configuration in which the indigo pigment is partially enclosed or encapsulated by the polymeric dispersant and partially exposed outside from the crosslinked polymer, or the configuration in which the crosslinked polymeric dispersant is adhered onto a surface of the indigo pigment, as well as a mixture of these configurations. Among these configurations of the indigo pigment-containing polymer particles, preferred is the configuration in which the indigo pigment is enclosed or encapsulated in the crosslinked polymeric dispersant.

The polymeric dispersant containing an acid group in the present invention has not only a function as an indigo pigment dispersant that is capable of exhibiting the effect of dispersing the pigment in an aqueous inkjet ink vehicle, but also a function as a fixing agent for fixing the pigment onto a substrate.

The acid group of the polymeric dispersant can be any acid group linked to the polymer, but is preferably a carboxylic acid, a sulphonic acid or a phosphoric acid group.

In a preferred embodiment of the invention, the indigo pigment polymer composite particle has an acid value of not more than 220 mg KOH/g polymeric dispersant, preferably 180 KOH/g, more preferably 150 mg KOH/g most preferably 135 mg KOH/g polymeric dispersant containing an acid group. The acid value of the polymeric group having an acid group is preferably not less than 30 mg KOH/g, more preferably not less than 10 mg KOH/g.

With respect to the above mentioned acid values of the indigo pigment polymer composite particle, it must be mentioned that the polymeric dispersant containing an acid group contributes mainly to the acid values of the pigment composite particle. Hence, in an even more preferred embodiment of the invention, the acid value of the indigo pigment polymer composite particle is at least equal to the acid value of the polymeric dispersant containing an acid group.

The above mentioned acid values are preferably obtained by crosslinking the acid group, preferably the carboxylic acid group with a crosslinking agent.

Examples of suitable polymeric dispersants containing an acid group include block co-polymers having a carboxy group obtained by addition-polymerization of vinyl monomers such as acid group-containing vinyl monomers (a) and hydrophobic vinyl monomers (b).

Among these monomers, as the component (a), preferred are acrylic acid and methacrylic acid, and as the component (b), preferred are styrene and benzyl (meth)acrylate, and more preferred is styrene.

In a preferred embodiment of the invention, a carboxy group-containing vinyl monomer (a) in the vinyl-based polymer containing an acid group is used as a monomer component of the polymer. As the carboxy group-containing vinyl monomer, there may be used carboxylic acid monomers.

Examples of the carboxylic acid monomers include acrylic acid, methacrylic acid, crotonic acid, itaconic acid, maleic acid, fumaric acid, citraconic acid, 2-methacryloyloxymethylsuccinic acid and the like. Among these carboxylic acid monomers, preferred is at least one monomer selected from the group consisting of acrylic acid and methacrylic acid.

Examples of suitable commercially available vinyl based polymers having an acid group are: Joncryl HPD 296E, Joncryl HPD 196, Joncryl 8078, Joncryl LMV 7025, Joncryl 680, Joncryl LMV 7085, Edaplan 480, Edaplan 482, Edaplan 516, Metolat 514, Tego Dispers 780W, Zetasperse 3100, Zetasperse 3700.

A.3. Vehicle

The aqueous ink according to the invention comprises water as a vehicle. The aqueous vehicle may further include one or more water-soluble organic solvents.

The one or more organic solvents may be added for a variety of reasons. For example, it can be advantageous to add a small amount of an organic solvent to improve the dissolution of a compound in the ink composition to be prepared or to prevent fast drying of the ink at the nozzle of the inkjet head.

Preferable water-soluble organic solvents are polyols (e.g., ethylene glycol, glycerin, 2-ethyl-2-(hydroxymethyl)-1 ,3-propanediol, tetraethylene glycol, triethylene glycol, tripropylene glycol, 1 ,2,4-butanetriol, diethylene glycol, propylene glycol, dipropylene glycol, butyleneglycol, 1 ,6-hexanediol, 1 ,2-hexanediol, 1 ,5-pentanediol, 1,2-pentanediol, 2,2-dimethyl-1 ,3-prapanediol, 2-methyl-2,4-pentanediol, 3-methyl-1 ,5-pentanediol, 3-methyl-1 ,3-butanediol, and 2-methyl-1 ,3-propanediol), N-hydroxyethyl-pyrrolidone, N-butyl-pyrrolidone, amines (e.g., ethanolamine, and 2-(dimethylamino)ethanol), monohydric alcohols (e.g., methanol, ethanol, and butanol), 2,2'-thiodiethanol, amides such as N,N-dimethylformamide, heterocycles such as 2-pyrrolidone and N-methyl-2-pyrrolidone, and acetonitrile.

Examples of the glycol ether include mono alkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol mono propyl ether can be preferably exemplified. Other useful examples which are listed in the Swiss list A and hence compatible with food packaging are: Propylene Glycol Monomethyl Ether; Propylene Glycol Monoethyl Ether; Propylene Glycol Monopropyl Ether; Ethylene Glycol Monobutyl Ether; Propylene Glycol Monobutyl Ether; Diethylene Glycol Monoethyl Ether; Diethylene Glycol Monobutyl Ether; Dipropylene Glycol Mono n-Propyl Ether; Dipropylene Glycol Methyl Ether; Tripropylene Glycol Monomethyl Ether. These solvents may be used alone or in combination of two or more. The humectant is preferably added to the pre-coat composition formulation in an amount of 0.1 to 25 wt.% based on the total weight of the liquid.

Preferably, if two or more organic solvents are present in the ink, one of the organic solvents being in the highest amount, has a boiling point of 150°C or more and 250°C or less. If the boiling point is below this range, the solvent is very volatile and may give an unwanted odour to the ink. When the boiling point of the solvent is above the mentioned range, the solvents have the tendency of not being eliminated in the drying step and remain in the printed image leading to a reduced resistance to rubbing and scratching of the printed image. This water-soluble organic solvent is preferably added to the ink composition formulation in an amount of 0.1 to 55 wt.% based on the total weight of the ink.

A.4. Resin

The aqueous ink according to the invention may comprise a resin. The resin is often added to the ink jet ink formulation to achieve a good adhesion of the pigment to the recording medium. The resin is preferably a polymer and suitable resins can be an acrylic based resin, a urethane resin or a wax.

The polyurethane resin is to be incorporated in the ink formulation as a dispersion and may be selected from the group consisting of aliphatic polyurethane dispersions, aromatic polyurethane dispersions, anionic polyurethane dispersions, non-ionic polyurethane dispersions, aliphatic polyester polyurethane dispersions, aliphatic polycarbonate polyurethane dispersions, aliphatic acrylic modified polyurethane dispersions, aromatic polyester polyurethane dispersions, aromatic polycarbonate polyurethane dispersions, aromatic acrylic modified polyurethane dispersions, for example, or a combination of two or more of the above.

A preferred urethane resin to be used as dispersion in the ink of the invention is a polyester resin including a structural unit containing a urethane bond. Among such resins, a water-soluble or water-dispersible urethane-modified polyester resin is preferred. It is preferable that the urethane-modified polyester resin include at least one structural unit derived from a hydroxyl group-containing polyester resin (polyester polyol) and at least one structural unit derived from an organic polyisocyanate.

Furthermore, the hydroxyl group-containing polyester resin is a resin formed by an esterification reaction or transesterification reaction between at least one polybasic acid component and at least one polyhydric alcohol component.

A preferred polyurethane resin to be included in the ink of the invention is a polyurethane resin obtainable by reacting a polyester polyol, a polyether diol, a polyol containing an anionic group and a polyisocyanate. A particular preferred polyurethane resin is a polyurethane resin obtainable by reacting a polyester polyol, a polyether diol, a polyol containing an anionic group and a polyisocyanate, and wherein the polyester polyol is obtained by reacting an aromatic polycarboxylic acid and a polyol. Examples of suitable polyurethane resins and their preparations are disclosed in the unpublished patent application EP16196224.6.

Some examples of suitable polyurethane dispersions are NEOREZ R-989, NEOREZ R-2005, and NEOREZ R-4000 (DSM NeoResins); BAYHYDROL UH 2606, BAYHYDROL UH XP 2719, BAYHYDROL UH XP 2648, and BAYHYDROL UA XP 2631 (Covestro); DAOTAN VTW 1262/35WA, DAOTAN VTW 1265/36WA, DAOTAN VTW

1267/36WA, DAOTAN VTW 6421/42WA, DAOTAN VTW 6462/36WA (Allnex); and SANCURE 2715, SANCURE 20041, SANCURE 2725 (Lubrizol Corporation), for example, or a combination of two or more of the above.

Acrylic based resins include polymers of acrylic monomers, polymers of methacrylic monomers, and copolymers of the aforementioned monomers with other monomers. These resins are present as a suspension of particles having an average diameter of about 30 nm to about 300 nm. The acrylic latex polymer is formed from acrylic monomers or methacrylic monomer residues. Examples of monomers of the acrylic latex polymer include, by way of illustration, acrylic monomers, such as, for example, acrylate esters, acrylamides, and acrylic acids, and methacrylic monomers, such as, for example, methacrylate esters, methacrylamides, and methacrylic acids. The acrylic latex polymer may be a homopolymer or copolymer of an acrylic monomer and another monomer such as, for example, a vinyl aromatic monomer including, but not limited to, styrene, styrene butadiene, p-chloromethylstyrene, divinyl benzene, vinyl naphthalene and divinylnaphthalene.

Some examples of suitable acrylic latex polymer suspensions are, JONCRYL 537 and JONCRYL 538 (BASF ); CARBOSET GA-2111, CARBOSET CR-728, CARBOSET CR-785, CARBOSET CR-761, CARBOSET CR-763, CARBOSET CR-765, CARBOSET CR-715, and CARBOSET GA-4028 (Lubrizol Corporation); NEOCRYL A-1110, NEOCRYL A-1131, NEOCRYL A-2091, NEOCRYL A-1127, NEOCRYL XK-96, and NEOCRYL XK-14 (DSM); and BAYHYDROL AH XP 2754, BAYHYDROL AH XP 2741, BAYHYDROL A 2427, and BAYHYDROL A2651 (Bayer), for example, or a combination of two or more of the above.

The concentration of the resin in the ink jet ink according to the invention is at least 1 wt.% and preferably lower than 30 wt.%, more preferably lower than 20 wt.%.

The aqueous inkjet ink of the invention may also comprise a wax. The wax in the ink improves wet rub or wet scratch resistance of the printed layer.

The inkjet ink composition according to the invention may comprise a capsule. Capsules, more preferably, nanocapsules are often incorporated in inkjet ink formulations to encapsulate colouring agents (US2009227711A, JP2004075759) or to encapsulate reactive ingredients which can cross-link. Particularly useful are the nanocapsules disclosed in WO2015158649 [0037-0110]: The nanocapsules have a polymeric shell surrounding a core containing reactive chemistry. The shell material includes polyureas, polyurethanes, polyesters, polycarbonates, polyamides, melamine based polymers and mixtures thereof, with polyureas and polyurethanes being especially preferred. Other particularly useful nanocapsules are disclosed in WO2016165970 [0051-0138]: the nanocapsules are selfdispersable and include a dispersing group covalently coupled to the shell polymers. The core of the nanocapsules in WO2015158649 [0037-0110] and WO2016165970 [0051-0138] comprise reactive chemistry which is able to form a reaction product upon application of heat and/or light, allowing a wide variety of substrates to be addressed. Other suitable reactive chemistry is the one which is activated upon radiation as described in WO2015158649 [0068-0110].

The resins are preferably present in the inkjet ink in an amount of no more than 30 wt.%, preferably between 5 and 25 wt.% based on the total weight of the ink.

A.5. Additives

The ink composition may contain a surfactant. Any known surfactant may be used but preferably a glycol surfactant and/or an acetylene alcohol surfactant and /or a polysiloxane surfactant is to be used. Suitable surfactants are The use of the acetylene glycol surfactant and/or the acetylene alcohol surfactant and/or the polysiloxane surfactant improves the drying property in printing to allow high-speed printing.

The acetylene glycol surfactant and/or the acetylene alcohol surfactant is preferably one or more selected from 2, 4, 7, 9-tetramethyl-5-decyne-4, 7-diol, alkylene oxide adducts of 2,4,7,9-tetramethyl-5-decyne-4, 7-diol, 2,4-dimethyl-5-decyn-4-ol, and alkylene oxide adducts of 2,4-dimethyl-5-decyn-4-ol. These are available from Nissin Chemical Industry, for example, as Olfine (registered trademark) E series, such as Olfine E1010, or from Evonik (formerly Air Products (GB)) as Surfynol (registered trademark), 104, Surfynol 465, Surfynol 61. Surfynol DF110, Dynol 604 Surfynol DF110L, Surfynol DF110D, Surfynol AD01 and ethoxylated derivatives such as CAS Registry Number 91629-35-5.

The ink composition may further contain a biocide, an optothermal converting agent, a thickener, a pH adjuster and a corrosion inhibitor.

The one or more optothermal converting agents are preferably present in the range of 0.1 to 10 wt.% based on the total weight of the ink.

Suitable thickeners include urea or urea derivatives, hydroxyethylcellulose, carboxymethylcellulose, hydroxypropylcellulose, derived chitin, derived starch, carrageenan, pullulan, proteins, poly(styrenesulphonic acid), poly(styrene-co-maleic anhydride), poly(alkyl vinyl ether-co-maleic anhydride), polyacrylamid, partially hydrolyzed polyacrylamid, poly(acrylic acid), poly(vinyl alcohol), partially hydrolyzed poly(vinyl acetate), poly(hydroxyethyl acrylate), poly(methyl vinyl ether), polyvinylpyrrolidone, poly(2-vinylpyridine), poly(4-vinylpyridine) and poly(diallyldimethylammonium chloride).

The thickener is added preferably in an amount of 0.01 to 20 wt.%, more preferably 0.1 to 10 wt.% based on the

liquid.

A biocide may be added to varnish to prevent unwanted microbial growth, which may occur over time. The biocide may be used either singly or in combination. Suitable biocides for the ink-jet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Proxel™ GXL and Proxel™ Ultra 5 available from ARCH UK BIOCIDES and Bronidox™ available from COGNIS.

A biocide is preferably added to the aqueous medium in an amount of 0.001 to 3 wt.%, more preferably 0.01 to 1.0 wt. %, each based on the total weight of the liquid.

## B. Image recording method

The image recording method according to the invention includes a step of attaching an aqueous ink comprises indigo pigment particles, a polymeric dispersant and a water-soluble organic solvent onto at least a part of a recording region S of a substrate.

B1. Substrate and substrate pre-treatment step

The recording method of the present invention is suitable for treating different substrates, absorbing and non-absorbing ones. A substrate is characterized as absorbing, when the amount of absorbed water after a contact time of 60 s is at least 10 g/$m^2$. Absorbing substrates include paper, card board, white lined chipboard, corrugated board, packaging board, folding board, wood, ceramics, stone, leather and textile. Non or low absorbing substrates include metal, glass, polypropylene, polyvinylchloride, PET, PMMA, polycarbonate, polyamide, polystyrene or co-polymers thereof and coated papers. These low or non-absorbing substrates are characterised that the quantity of water absorption from the start of contact to 30 $ms^{1/2}$ is 10 ml/$m^2$ or less according to the Bristow method ". The Bristow method is widely used as a method for measuring the liquid absorption amount in a short period of time and has been adopted by Japan Technical Association of the Pulp and Paper Industry (Japan TAPPI). The details of the testing method are described in the standard No. 51 "Paper and Paperboard-liquid absorbability testing method-Bristow method" of the "JAPAN TAPPI paper and pulp testing method 2000 version".

The image recording method of the invention is particularly suited for being applied on paper substrates intended for packaging applications, more preferably packaging applications including card board, paper liners, corrugated board, packaging board, folding board and paper. The paper can be a single layer of a multilayer paper.

The paper may be brown Kraft, White Top or bleached board. The paper may be manufactured from chemical, wood, or recycled fibre. As an example, the paper may be a liner intended for printing on page wide web presses and converted into corrugated boxes. In this aspect, the liner paper may be used as a double face liner and may be converted directly in a corrugator or laminated onto a double face liner after corrugation. The paper may also be boards used for boxes and other packaging applications.

In a preferred embodiment of the invention, the substrate is pre-treated by applying an aqueous pre-treatment liquid to at least a part of the recording region S of one of the above mentioned substrates before the attaching of the aqueous ink occurs.

The pre-treatment liquid is preferably applied by coating or impregnating at least a part of the recording region S of the substrate. Examples include air knife coating, blade coating, roll coating, gravure coating, immersion, padding, dipping, and spraying of the aqueous pre-treatment liquid. More preferably the pre-treatment liquid is applied by means of a jetting technique.

The pre-treatment liquid is then applied using an inkjet head or valve jet head. This means of applying the pre-treatment composition, which is preferably according to an image, has the advantage that the amount of required pre-treatment liquid is substantially lower than with the other application methods. By means of a jetting head, it is possible to apply the pre-treatment liquid onto areas of the substrate where the image should be printed. Suitable inkjet head types for applying the pre-treatment liquid are piezoelectric type, continuous type, thermal print head type, Memjet-type, valve jet type.

In a more preferably embodiment of the invention the substrate is a textile fabric and the aqueous pre-treatment liquid is applied via dipping, spraying or coating.

In an even more preferable embodiment of the invention the pre-treatment liquid for treating textile fabrics contains a reducing agent to bring the indigo material when adhered to a textile fabric in its water soluble leuco-indigo form. Suitable reducing agents are sulfite, sulfide, sulfate, bisulfite, metabisulfite, dithionite, thiosulfate, $\alpha$-hydroxyl ketones, hydroxyalkyl sulfonate, monosachharides such as fructose, sodium hydrosulfite, thiourea dioxide and combinations thereof.

The textile substrate suitable to the recording method of the invention comprises a material selected from a

polyester, a polyamide, cotton, linen, wool, kapok, ramie, cellulose, acetylated cellulose, polyurethane, polyacrylate, rubber, rayon and silk or any combination thereof. The textile fabric may be knitted, woven or non-woven.

After applying the pre-treatment liquid onto a substrate, the applied drops or coating is preferably at least partially dried such as to form a pre-coat layer.

Substrates to which the pre-treatment composition has been applied may be dried and optionally undergo a heat treatment, before the subsequent adhering step of the aqueous ink. Examples of the heating process include, but are not limited to, heat press, atmospheric steaming, high-pressure steaming, and THERMOFIX. Any heat source can be used for the heating process; for example, an infrared ray lamp is employed.

In another preferred embodiment of the invention the pre-treatment liquid may comprise a fixing agent which is able to precipitate, flocculate and/or immobilize the colouring agents of the aqueous inkjet ink containing the indigo pigment or other pigments such as yellow, magenta and black pigments and hence fix them to the substrate. This leads to an improved image quality (less bleeding, less coalescence).

The fixing agent present in the pre-treatment composition is preferably a multivalent metal salt, a cationic polymer or an organic acid.

The polyvalent metal salt may be present in the pre-treatment composition to improve inkjet print quality. Generally, the polyvalent metal salt may be any water-soluble polyvalent metal salt. In specific examples, the polyvalent metal salt may include calcium chloride ($CaCl_2$), magnesium chloride ($MgCl_2$), magnesium sulfate ($MgSO_4$), aluminium chloride ($AlCl_3$), calcium nitrate ($Ca(NO_3)_2$), magnesium nitrate ($Mg(NO_3)_2$), magnesium acetate ($Mg(CH_3COO)_2$), zinc acetate ($Zn(CH_3COO)_2$) calcium propionate ($Ca(C2H_5COO)_2$), or a combination thereof. In a particular example, the polyvalent metal salt may be calcium chloride. In further examples, the polyvalent metal salt may include a metal cation selected from calcium, copper, nickel, magnesium, zinc, barium, iron, aluminium, chromium, or another polyvalent metal.

In some cases, the polyvalent metal salt may be present in an amount from 1 wt. % to 99 wt. % with respect to the entire weight of the pre-treatment composition. In more specific examples, the polyvalent metal salt may be present in an amount from 5 wt. % to 65 wt. %, more preferably from 25 wt. % to 60 wt. %, with respect to solids content of the pre-treatment composition. If the amounts are below the lower limits, insufficient fixing of the colorants occur resulting in a reduced image quality.

Polymeric cationic polymers, suitable as fixing agent in the pre-treatment composition contain either guanidinium or fully quaternized ammonium functionalities, such as quaternized polyamine copolymers. Generally, the weight average molecular weight (Mw) of the cationic polymer allows viscosity less than 25 cP at 25°C, as measured on a Brookfield viscometer. Typical Mw are less than 500.000 g/mol, and in one aspect, less than 50.000 g/mol.

Suitable classes of cationic polymers that can be used include, but are not limited to, quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof.

The organic acid is preferably a carboxylic acid containing polymer or salt thereof or a carboxylic acid anhydride containing polymer, the polymer having an acid value equal to 950 mg KOH / g of polymer or less.

B.2. Attaching an aqueous inkjet ink

Directly onto a recording region of a substrate or after the application of the pre-treatment liquid to the substrate, the aqueous inkjet ink comprising indigo pigment particles, a polymeric dispersant and a water-soluble organic solvent is attached to at least a part of a recording region S.

The attaching may be done by any conventional means of jetting drops of aqueous ink such as inkjet and valve jet. These jetting techniques allow to image wise attach the aqueous ink with the indigo pigment particles to the substrate.

A preferred ink jet head for the jetting of the aqueous ink is a piezoelectric inkjet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with aqueous inkjet ink. When the voltage is again removed, the ceramic expands to its original shape, ejecting a drop of pre-treatment composition from the inkjet head. However, the jetting of the ink according to the present invention is not restricted to piezoelectric inkjet printing. Other inkjet print heads can be used and include various types, such as a continuous type, a thermal print head type, a Memjet-type of head and a valve jet type.

After having attached the aqueous inkjet ink containing the indigo pigment particles, the polymeric dispersant and a water-soluble organic solvent on at least a part of a recording region S, such that an image is formed, the image is preferably dried.

The drying step of the image can be performed by applying an air flow and or apply heating. The heating step must be performed by using heat sources; examples include equipment for forced-air heating, radiation heating such as IR-radiation, including NIR-, CIR- and SWIR radiation, conduction heating, high-frequency drying, and microwave drying. Examples of the heating process include, but are not limited to, heat press, atmospheric steaming, high-pressure steaming

and THERMOFIX. Any heat source can be used for the heating process; for example, an infrared ray lamp is employed.

The drying step is preferably applied in the presence of oxygen which may be originating from air flows during the drying step. The oxygen is required to bring the leuco from of indigo back into the coloured form of indigo. This is particularly beneficial when the image recording method includes a pre-treatment step applied to a textile fabric using a pre-treatment liquid containing a reducing agent.

C. Ink set

The aqueous ink as described in § A. may be part of an ink set comprising this aqueous ink as a first aqueous ink and a second aqueous ink, the first ink preferably comprises bio-based indigo pigment particles. The second aqueous ink comprises a water-soluble organic solvent and a pigment selected from the group consisting of a yellow pigment, a magenta pigment and a black pigment.

The colour pigment of the second aqueous ink may be chosen from those disclosed by HERBST, Willy, et al. Industrial Organic Pigments, Production, Properties, Applications. 3rd edition. Wiley - VCH, 2004. ISBN 3527305769.

The pigments of the second aqueous ink used in the present invention are not particularly limited, and may be either an organic pigment or an inorganic pigment and may also be used in the form of a mixture of these pigments.

Examples of the organic pigments of the second ink include at least one pigment selected from the group consisting of condensed polycyclic pigments such as anthraquinone-based pigments, quinacridone-based pigments, indigo-based pigments, dioxazine-based pigments, perylene-based pigments, perinone-based pigments, isoindolinone-based pigments, isoindoline-based pigments, quinophthalone-based pigments and diketopyrrolopyrrole-based pigments, and azo-based pigments such as diazo-based pigments and condensed azo-based pigments. Of these organic pigments, from the viewpoint of improving colour reproducibility of printed images, preferred is at least one pigment selected from the group consisting of quinacridone-based pigments, azo-based pigments and carbon black based pigments.

Specific examples of the quinacridone-based pigments that are capable of exhibiting a magenta colour include C.I. PR (Pigment Red) 122, PR 192, PR 202, PR 207 and PR 209; and C.I. PV (Pigment Violet) 19, etc. Of these quinacridone-based pigments, preferred is at least one pigment selected from the group consisting of C.I. PR 122 and C.I. PV 19. Specific examples of the azo-based pigments that are capable of exhibiting a yellow colour include C.I. PY (Pigment Yellow) 74, PY 151, PY 154, PY 155, PY 180 and PY 213. Of these azo-based pigments, preferred is at least one pigment selected from the group consisting of C.I. PY 74 and C.I. PY 154. The carbon blacks are preferably used for black inks. Specific examples of the carbon black pigments include furnace blacks, thermal lamp blacks, acetylene blacks and channel blacks, and the carbon blacks may also be surface-treated carbon blacks.

Other examples of organic pigments are natural or bio-based pigments such as bio-based carbon black, bio-based magenta pigments, bio-based yellow pigments. When the second ink contains one of natural or bio-based organic pigments and is combined with the first ink containing bio-based indigo pigment particles, a fully bio-based ink set can be obtained. As such, decarbonized alternative ink set based on renewable resources for sustainable image formation via inkjet can be achieved.

In a preferred embodiment of the invention, the ink set comprises a first aqueous ink, preferably comprising bio-based indigo pigment particles, a polymeric dispersant and a water soluble organic solvent, a second aqueous ink comprises a water-soluble organic solvent and a yellow pigment, a third aqueous ink comprising a water-soluble organic solvent and a magenta pigment and a fourth aqueous ink containing a water-soluble organic solvent and a black pigment. By means of this ink set comprising 4 inks images can be printed on a substrate showing a sufficient colour space for reproducing colour images.

## D. Examples

D.1. Materials

All materials used in the following examples were readily available from standard sources such as Sigma-Aldrich (Belgium) and Acros (Belgium) unless otherwise specified. The water used was demineralised water.

**• Synthetic Indigo, SI**

- **Bio-Indigo, BI** (100%) is bio-based indigo prepared via an enzymatic process
- **Natural Indigo, NI** (30%) is a natural indigo obtained from plants and is present in CaCO3 matrix (60%), supplied by Riquenza

- **Dispex Ultra PX4575** is a 40 wt.%, made by controlled free radical polymerization by BASF having an acid value of 32 mg KOH/g
- **Disperbyk 190** is a 40wt.%, is especially designed for the production of resin-free, stable pigment concentrates having a acid value of 10 mg KOH/g from Byk GmbH
- **REAX 85 A** is a 93 wt.%, is the sodium salt of a chemically modified medium molecular weight kraft lignin polymer from INGEVITY UK LTD
- **Bykjet 9152** is a 100wt.%, is a structured acrylate copolymer and having an amine value of 19 mg KOH/g from Byk GmbH
- **Lucramul RL** is a 100wt.%, is recommended for dispersions of organic pigments and carbon blacks in water containing pigment concentrates from Levaco Chemicals GmbH
- **Edaplan 482** is a 85.5 wt.%, is a solvent free wetting agent and dispersant for organic and inorganic pigments and extenders in aqueous media from Münzing Chemie GmbH
- **BYK-LP R 21675** is a liquid rheology control additive for Water Based Systems, is a solution of a polyacrylic ester from Byk GmbH
- **Surfynol 104 PG50** is a 50 wt.% solution of 2,4,7,9-Tetramethyl-5- decyne-4,7-diol in propylene glycol from Evonik Industries AG
- **Surfynol 465** is a 100wt.% ethoxylated acetylenic diol surfactant, is a good substrate wetting agent with very good solubility in aqueous systems from Evonik Industries AG
- **Rhodoline 3600** is a (Poly(oxy-1,2-ethanediyl), alpha-sulfo-omega-[2,4,6-tris(1-phenylethyl)phenoxy]-, ammonium salt that is used as dispersion agent and is manufactured by Solvay
- **JONCRYL 8078** is a 32 wt.%, ready-made ammonia solution of a styrene-acrylic resin manufactured by BASF
- **JONCRYL HPD296E** is 100wt.% styrene acrylic resin manufactured by BASF
- **Sokolan CP12S** is a poly(acrylic acid-co-maleic acid) having a Mw of 3000 g/mole, a calculated acid value of 826 mg KOH/g polymer from BASF
- **$Mg(NO_3)2.6H_2O$** is Magnesium nitrate hexahydrate from Merck Group
- **Proxel** is a 5 wt.% aqueous solution of 1,2-benzisothiazolin-3-one available as Proxel™ K from YDS CHEMICALS NV
- **Hydropalat WE3120** is a C12-C14 ethoxylated, propoxylated alcohol from BASF
- **Kauropal K933** is a non-ionic oxirane, mono(2-propylheptyl) ether from BASF
- **Tego Foamex 822** is a polyether siloxan copolymer from Evonik
- **nBuOH** is n-butanol
- **Denacol- I-EX321** is an aliphatic multi-functional epoxy based on trimethylolpropane from Nagase & Co Ltd.
- **PG** is propylene glycol

### D.2. Measuring methods

D.2.1. Average Particle size of indigo pigment particles in dispersion (PS)

The average particle size of the indigo pigment particles in dispersion or ink was measured using a Zetasizer™ Nano-S (Malvern Instruments, Goffin Meyvis) based upon the principle of dynamic light scattering. For reliable ink jetting characteristics (jetting quality and print quality), the average particle size of the dispersed particles is preferably below 300 nm. The average particle size of the indigo pigment particles as such was executed by use of a Zetasizer™ Nano-ZS (Malvern Instruments, Goffin Meyvis) based upon the principle of dynamic light scattering.

D.2.2. Viscosity of the indigo pigment dispersion

The viscosity of the indigo particle dispersion was evaluated with an Anton Paar MCR302 Rheometer in a cone plate set-up. The viscosity is measured at a shear rate of 10 $s^{-1}$ at a temperature of 25°C.

As a first evaluation of the storage stability of the indigo particle dispersion, the viscosity increase is measured after ageing the dispersion for 1 week in an oven at 60°C. The relative change in viscosity is calculated according following formula: RChvisco: [(Viscosity(1 week 60°C)-Viscosity(fresh))/ Viscosity(fresh)].

D.2.3. Stability of the indigo pigment dispersion

Another parameter to evaluate the storage stability of the dispersions is the change in pigment particle size (PS) after ageing 1 week in an oven at 60°C. The average particle size of the dispersion was measured as in § D.2.1. The relative change in average particle size (PS) was calculated as follows: [(PS(1 week 60°C)- PS(fresh))/ PS(fresh)]. Now the overall dispersion stability could be scored according to Table 1.

Table 1: Scoring of dispersion stability

| Dispersion stability | Score |
|---|---|
| PS<10, RChvisco <30 | A |
| 10≤PS<20, RChvisco<30 or PS<10, 30≤RChvisco<60 | B |
| 20≤PS, 30≤RChvisco | C |

D.2.4. Storage stability of aqueous inks

Storage stability of the aqueous inks is evaluated by putting a sample tube (closed at the top) filled for 80% with ink in an oven at 60 °C. The viscosity and particle size distribution of the ink is evaluated after 1 and 2 weeks of storage at this temperature. To be practically suited, the viscosity of an aqueous inkjet ink should not deviate more than 20% from the original value. The (kinematic) viscosity is evaluated using a HERZOG HVM472 instrument at a temperature of 32°C. The relative change in Kinematic viscosity was calculated as follows: [(Viscosity(1 week 60°C)-Viscosity(fresh))/ Viscosity(fresh)] and scored according to Table 2.

Table 2: Scoring of relative change in kinematic viscosity (Visco)

| Relative change of Visco (%) | Score |
|---|---|
| Visco < 10 | A |
| 10 ≤ Visco < 20 | B |
| 20 ≤ Visco < 30 | C |
| 30 ≤ Visco | D |

D.2.5. Jetting Performance tests

The inkjet inks were filtered over a 0.7 μm Whatman filter, degassed for 30 minutes in an ultrasound bath and filled in a Samba 2.4 pL cartridge supplied by Dimatix, which was mounted in a Dimatix TM DMP 2831 system.

The inks were jetted using a head temperature of 32°C, a firing voltage of 20V, aiming at a drop speed of 6m/s. Visual evaluations were done of the jetting behaviour of 5 nozzles and by counting for each test the number of nozzles failing in jetting and number of nozzles showing side shooting (=deviating nozzles causing inaccurate landing of drops) onto an Austroliner 3 with substrate with respectively a 1drop per drop per dot and 2 drops per dot waveform.

For the 30 s reliability, inks were continuously jetted for 30 s at varied jetting frequency (5KHz-25KHz), after which the number of side shooting nozzles was counted. For the open head time test, the jetting was interrupted for 5s-5min. Upon restarting the jetting, the number of failing nozzles was counted.

D.2.6. Surface area and Pore volume analysis of bulk indigo particles

The BET (Brunauer, Emmett and Teller) theory is used to evaluate gas adsorption data on pigment powders and generate a specific surface area using a Tristar 3000 (Micromeritics Intrument Corp.).

D.2.7. UV stability

Irradiation was performed using a Suntest CPS + (Leverancier nagaan (morgen) ) equipped with a xenon lamp ( 1100 \ A). The irradiance was set at 750 W / $m^2$ with UV special glass filter (Outdoor conditions).

D.2.8. Average molecular weight measurement of polymeric dispersant

The average molecular weight of the polymeric dispersants was measured with Gel Permeation Chromatography on a Waters e2695 with a Waters 2414 RI detector. Therefore, 20 mL of the polymeric dispersant was dissolved in 10 mL tetrahydrofuran (THF). 100 μL of a dissolution of the dispersant in THF was injected on a 3x Mixed B column set with Eluens THF having 5% acetic acid.

D.2.9. NMR calculation of the mol.% of aromatic groups w.r.t. total weight of the polymeric dispersant.

Nuclear Magnetic Resonance of het 1H protons of the dispersants in deuterated water was measured on a Varian 400 MHz DD2 with an auto-tunable probe. The mol.% of aromatic groups was calculated from the ratio of integrated aromatic signals originating from the 1H protons on the aromatic groups over the residual integrated signals originating from the 1H protons not linked to the aromatic groups.

D.2.10. Acid number

**[0111]** The acid number of polymeric dispersants could be determined by titration with a mixture of Dichloromethane:Methanol (13:2) with TBAOH 0.1N.

D.2.11. Water resistance

The water resistance of the coated samples on textile fabrics was evaluated by measuring the CIELAB ΔE after wet rubbing.

The water resistance test is done according to ISO105-X12 with a Crockmeter SDL ATLAS M238AA. 0,02 - 0,04 ml of water is applied on top of the sample and subsequently the surface of the sample is treated with 10 double wipes using the crock meter.

The coloration of the white rubbing cloth is measured 24h after performing the crock test, the colouration is given as ΔE according to the Cielab color space. The lower the ΔE values, the better the water fastness.

D.3. Analysis of bulk indigo particles and surface area

Synthetic(=SI) and bio-based indigo (=BI) differ in particle size, surface area and pore volume, which can be seen in Table 3. The D90 of synthetic indigo is lower than the D90 of bio-based indigo as well as the pore volume and surface area. It is known to a person skilled in the art that particles with a large surface area tend to aggregate as they are thermodynamically more unstable.

Table 3: Parameters of bulk indigo particles

| | Particle size (D90) (μm) | Surface area ($m^2/g$) | Pore volume (mL/g) |
|---|---|---|---|
| SI | 60.6 | 17.8 | 0.15 |
| BI | 267 | 30.5 | 0.24 |

From JP2008150507 it was clear that Indigo is difficult to stabilize as well as prone to over-milling. As the BI shows a larger surface area and larger particles compared to the SI, the factor of increase in surface area will be much higher and stabilization will be more challenging.

A link between the surface area and particle size can be established with the formula I. The specific surface area $S_e$ is related to the density of the material (ρ) and the Sauter diameter, which is the mean diameter based on surface area.

$$S_e = \frac{6\sum\frac{V_i}{d_i}}{\rho\sum V_i} = \frac{6}{\rho D_S}$$

Formula I

D.4. Preparation of indigo pigment dispersions

All quantities in this section are given in wt.% with respect to the total weight of the dispersion.

D.4.1. Preparation of synthetic (SI), bio-based (B!) and natural indigo (NI) pigment dispersions

A plastic bottle of 100mL is filled with 15wt.% pigment, 7.5wt.% dispersant, 0.4 wt.% Proxel and deionized water was added to complete the mixture to 100wt.%. The bottle was further filled with 160g of 3mm yttrium stabilized zirconia beads. The bottle was placed on a roller bench, rolling for 7 days, after which the dispersion was separated from the beads

via decantation. The results of the particle size and viscosity are summarized in Table 4.

Stable indigo pigment dispersions could be achieved when the polymeric dispersants are a block co-polymer having an average molecular weight higher than 1.2 kDa and an amount of aromatic groups between 0 to 30 mol.%. The polymeric dispersant Reax 85A is not a block co-polymer and leads to storage unstable dispersions which are unsuitable for being incorporated in aqueous inks for image recording methods including inkjet printing.

D.4.2. Preparation of indigo pigment particles with crosslinked polymeric dispersants DISP-11 & DISP-12

A plastic bottle of 100mL is filled with 15wt.% pigment, 7.5wt.% dispersant, 0.4 wt.% Proxel and deionized water was added to complete the mixture to 100 wt.%. The bottle was further filled with 160 g of 3mm yttrium stabilized zirconia beads and placed on a roller bench, rolling for 7 days, after which the dispersion was separated from the beads via decantation (see Table 5 for the characteristics of the intermediate dispersions).

Table 4: List of indigo pigment particle dispersions and respective stability results

| Dispersion | INV / COMP | Type of indigo | Polymeric dispersant | Molecular weight of polymeric dispersant in kDa | Mol.% aromatic groups of polymeric dispersant | Average PS (nm) | Viscosity fresh (mPa.s) | Relative change of PS (%) | Stability of the dispersion |
|---|---|---|---|---|---|---|---|---|---|
| DISP-1 | COMP | SI | REAX 85A | 3.2 | 38 | 165 | 17.0 | -3 | A |
| DISP-2 | COMP | NI | REAX 85A | 3.2 | 38 | 187 | 145 | 1 | C |
| DISP-3 | COMP | BI | REAX 85A | 3.2 | 38 | 142 | 8.6 | 6 | A |
| DISP-4 | INV | SI | Dispex Ultra Px 4575 | 10 | 1.5 | 160 | 7.5 | -0.9 | A |
| DISP-5 | INV | NI | Dispex Ultra Px 4575 | 10 | 1.5 | 184 | 13.1 | 7.2 | B |
| DISP-6 | INV | BI | Dispex Ultra Px 4575 | 10 | 1.5 | 152 | 8.6 | -6.9 | A |
| DISP-7 | INV | SI | Disperbyk 190 | 19.6 | 3.5 | 147 | 6.4 | 6.7 | A |
| DISP-8 | INV | NI | Disperbyk 190 | 19.6 | 3.5 | 158 | 7.8 | 12 | B |
| DISP-9 | INV | SI | Bykjet 9152 | 3.3 | 7 | 201 | 7.2 | -2 | B |
| DISP-10 | INV | NI | Bykjet 9152 | 3.3 | 7 | 159 | 883 | 7 | C |
| DISP-13 | INV | NI | EDAPLAN 482 | 23.4 | 0 | 409 | 11.8 | 17 | C |
| DISP-14 | INV | SI | EDAPLAN 482 | 23.4 | 0 | 193 | 4.1 | -12 | B |
| DISP-15 | COMP | NI | LUCRAMUL RL | 1.1 | 21 | 223 | 720.3 | 15 | C |
| DISP-16 | COMP | SI | LUCRAMUL RL | 1.1 | 21 | 174 | 7.7 | 67 | C |
| DISP-17 | INV | SI | RHODOLINE3600 | 1.4 | 21 | 185 | 4.1 | 14 | B |

Table 5: Characteristics of inventive indigo pigment dispersions

| Dispersion | | Type of indigo | Polymeric dispersant | Molecular weight (in kDa) | Acid nr |
|---|---|---|---|---|---|
| DISP-11' | INV | SI | JONCRYL 8078 | 9.7 | 54 |
| DISP-12' | INV | SI | JONCRYL HPD296E | 11.5 | 34 |

DISP-11' and DISP-12' were diluted to a solids content of 10 wt.% with water, followed by addition of Denacol-EX321 (0.15 wt.% based on the total mass of the reaction mixture). The crosslinking reaction was performed by stirring the mixture for 5 hours at a temperature of 65 °C.

The resulting crosslinked dispersions were respectively DISP-11 and DISP-12. The pigment load in each of the dispersions is 6.7 wt.%. The results of the particle size and viscosity are summarized in Table 6, and showed that these indigo pigment dispersions are stable upon storage and can advantageously be used in an inkjet ink.

Table 6: Storage stability of inventive indigo pigment dispersions containing a crosslinked dispersant

| Dispersion | | Type of indigo | Average PS size fresh (nm) | Viscosity fresh (mPa.s) | Relative change in PS (%) | Stability of the dispersion score |
|---|---|---|---|---|---|---|
| DISP-11 | INV | SI | 208 | 2.4 | 0.5 | A |
| DISP-12 | INV | SI | 204 | 2.3 | 3 | A |

**D. 5. Ink formulations**

In the next step, inks were formulated from the dispersions described in Table 4 and Table 6. Inventive and comparative inks were formulated according to the compounds in Table 7, using pigment dispersions prepared in § D.4. All values are in wt.% with respect to the total weight of the ink.

The kinematic viscosity at 32°C was measured of all inventive ink formulations as described in § D.2.4. The measured viscosity values of the fresh and aged inks are listed in Table 8.

Table 7: Compositions of aqueous inks containing indigo particles

| Compound in wt.% | INK-1 | INK-2 | INK-3 | INK-4 | INK-5 | INK-6 | INK-7 | INK-8 | INK-9 | INK-10 | INK-11 | INK-12 | INK-13 | INK-14 | INK-15 | INK-16 |
|---|---|---|---|---|---|---|---|---|---|---|---|---|---|---|---|---|
| DISP-1 | 12.66 | - | 26.66 | - | - | - | - | - | - | - | - | - | - | - | - | - |
| DISP-3 | - | 12.66 | - | 26.66 | - | - | - | - | - | - | - | - | - | - | - | - |
| DISP-11’ | - | - | - | - | - | - | - | - | - | 12.66 | - | - | - | - | - | - |
| DISP-12’ | - | - | - | - | - | - | - | - | - | - | 12.66 | - | - | - | - | - |
| DISP-11 | - | - | - | - | 28.30 | - | - | - | - | - | - | - | - | - | - | - |
| DISP-12 | - | - | - | - | - | 28.30 | - | - | - | - | - | - | - | - | - | - |
| DISP-8 | - | - | - | - | - | - | 12.66 | - | - | - | - | - | - | - | - | - |
| DISP-5 | - | - | - | - | - | - | - | 12.66 | - | - | - | - | - | - | - | - |
| DISP-9 | - | - | - | - | - | - | - | - | 12.66 | - | - | - | - | - | - | - |
| DISP-6 | - | - | - | - | - | - | - | - | - | - | - | 12.66 | - | - | - | - |
| DISP-4 | - | - | - | - | - | - | - | - | - | - | - | - | 12.66 | - | - | - |
| DISP-3 | - | - | - | - | - | - | - | - | - | - | - | - | - | 12.66 | - | - |
| DISP-14 | - | - | - | - | - | - | - | - | - | - | - | - | - | - | 12.66 | - |
| DISP-6 | - | - | - | - | - | - | - | - | - | - | - | - | - | - | - | 12.66 |
| PG | 44 | 44 | 10 | 10 | 44 | 44 | 44 | 44 | 44 | 44 | 44 | 44 | 44 | 44 | 44 | 44 |
| n-BuOH | 2.95 | 2.95 | 2.96 | 2.96 | 2.95 | 2.95 | 2.95 | 2.95 | 2.95 | 2.95 | 2.95 | 2.95 | 2.95 | 2.95 | 2.95 | 2.95 |
| Surfynol 104PG50 | 0.4 | 0.4 | - | - | 0.4 | 0.4 | 0.4 | 0.4 | 0.4 | 0.4 | 0.4 | 0.4 | 0.4 | 0.4 | 0.4 | 0.4 |
| Proxel | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| BYK LP-R 21675 | - | - | 1 | 1 | - | - | - | - | - | - | - | - | - | - | - | - |
| Surfynol 465 | - | - | 1 | 1 | - | - | - | - | - | - | - | - | - | - | - | - |
| D.I. water | up to 100% | up to 100% | up to 100% | up to 100% | up to 100% | up to 100% | up to 100% | up to 100% | up to 100% | up to 100% | up to 100% | up to 100% | up to 100% | up to 100% | up to 100% | up to 100% |

Table 8: Storage stability of aqueous inks containing indigo pigment particles

| Ink | INV / COMP | PS (nm) | PS increase after 7 days storage (%) | Kinematic viscosity ( mPa.s) at 32°C | Viscosity increase after 7 days (%) | Storage stability score |
|---|---|---|---|---|---|---|
| INK-1 | COMP | 459 | -25 | 64.2 | -91 | C |
| INK-2 | COMP | 470 | -39 | 59.1 | -90 | C |
| INK-3 | COMP | 177 | 148 | 3.7 | 136 | C |
| INK-4 | COMP | 163 | 100 | 3.0 | 231 | C |
| INK-5 | INV | 201 | -10 | 4.7 | -2 | A |
| INK-6 | INV | 198 | 0 | 5.6 | -11 | A |
| INK-7 | INV | 163 | -2 | 4.6 | -1 | A |
| INK-8 | INV | 188 | -7 | 4.9 | -1 | A |
| INK-9 | INV | 198 | -5 | 4.5 | 10 | A |
| INK-10 | INV | 208 | 6 | 4.4 | 9 | A |
| INK-11 | INV | 204 | -8 | 4.7 | -1 | A |
| INK-12 | INV | 156 | -5 | 4.6 | 5 | A |
| INK-13 | INV | 181 | 7 | 5.2 | -4 | A |
| INK-14 | INV | 188 | 1 | 4.6 | 0 | A |
| INK-15 | INV | 181 | -3 | 4.5 | -3 | A |
| INK-16 | INV | 155 | | 4.8 | | A |

Inks containing lignosulphonate as a polymeric dispersant show to be unstable in low and high containing water-soluble organic solvent inks. This is related to the small contribution of the hydrophilic part in the total dispersant molecule. The other dispersions where subjected to the most critical test in aqueous inks containing a high amount of water-soluble organic solvents. As can be seen from the scoring, all inventive aqueous inks perform well.

D.6. Pre-treatment liquids

D.6.1. Preparation of pre-treatment liquid for textile fabric treatment

The pre-treatment liquid for textile fabric treatment was an aqueous solution of 3 g/ L of $Na_2S_2O_4$.

D.6.2. Preparation of pre-treatment liquid for paper-based substrates.

The pre-treatment liquid for paper-based substrate is prepared by mixing the ingredients of Table 9 together. The weight percentages are relative to the total weight of the pre-treatment liquid.

Table 9: Composition of aqueous pre-treatment liquid for paper-based substrates

| Compound | Amount (wt.%) |
|---|---|
| Sokolan CP12S | 4.0 |
| $Mg(NO_3)_2.6H_2O$ | 15.0 |
| Sodium Acetate trihydrate | 1.28 |
| Acetic acid | 0.03 |
| Proxel | 0.2 |
| Hydropalat WE3120 | 1.0 |
| Kauropal K933 | 0.04 |
| Tego Foamex 822 | 0.04 |

(continued)

| Compound | Amount (wt.%) |
|---|---|
| 1,2-propanediol | 32.0 |
| nBuOH | 2.85 |
| D.I. water | 43.56 |

D.6.3. Preparation of coated samples

The substrate, cotton or paper, was coated with aqueous ink by use of the Elcometer Motorised Film Applicator. The Motorised Film Applicator is designed for use with spiral bar coaters. If a primer was applied, a 6μ spiral bar was used at mode 11. The inks were coated with a 10 μ spiral bar or a 16 μ spiral bar if they were applied on pre-treated substrate. The primer was dried for two minutes at 60°C and the inks were dried for 5 minutes at 60°C.

D.6.4. Quality of coatings on paper

The inks of the synthetic, bio-based and natural indigo with the polymeric dispersant Dispex Ultra PX4575 were coated on a pre-treated and not pre-treated paper substrate to investigate the properties of the coatings and difference in colour density. For the 6 coatings the L value represented the colour density, which we wanted to be as low as possible. Next to that, a score on the coating was given ranging from A to C (good to bad), based on spreading and fish-eyes (see Table 10).

Table 10: L values and coating quality of coatings of aqueous ink containing indigo pigment particles

| **INK** | **Primer (Y/N)** | **L value** | **Coating quality score** |
|---|---|---|---|
| INK-13 | No | 62.22 | B |
| INK-13 | Yes | 37.70 | B |
| INK-8 | No | 89.12 | B |
| INK-8 | Yes | 78.75 | C |
| INK-16 | No | 59.52 | B |
| INK-16 | Yes | 35.08 | A |

The best coating quality could be obtained with the ink made with bio-based indigo as the coatings score was A as well as the fact that a low L value, related to a high colour density could be obtained. With the synthetic indigo, also high colour density coatings could be obtained but the coating quality was less good as more fisheyes were present. This could be attributed to the surface tension of the ink.

D.6.5. Coating quality of coatings on textile fabric

The inks of the synthetic, bio-based and natural indigo with the polymeric dispersant Dispex Ultra PX4575 were coated on dry, wet and pre-treated cotton with the pre-treatment liquid as prepared in § D.6.1. The L value is measured to determine the colour density. Next to this, the crock fastness of the coatings as measured according to D.2.11. is also measured to determine the colour fastness after washing. Both measurements show satisfactory results.

D.7. Comparative aqueous inks

Comparative aqueous inks were prepared with a composition chosen from the ranges presented in the article from Jonghoon Kim et al., Performance Evaluation of Ink and Digital Textile Printing Fabric Using Natural Indigo; Fibers and Polymers (2023) 24:1309-1319.

Two plastic bottles of 100mL were filled with the components listed in Table 11 to obtain aqueous inks INK-19 & INK-20 according to the above mentioned article. The bottles were further filled with 160g of 3mm yttrium stabilized zirconia beads and placed on a roller bench, rolling for 7 days, after which the dispersion was separated from the beads via decantation. The results of the particle size and viscosity of the obtained inks are summarized in Table 12.

Table 11: Composition of comparative aqueous inks

| | INK-17 | INK-18 | INK-19 | INK-20 |
|---|---|---|---|---|
| SI | 15 | - | 15 | - |
| NI | - | 15 | - | 15 |
| PG | 38,27 | 38,27 | - | - |
| nBuOH | 2,95 | 2,95 | - | - |
| surfynol104PG50 | 0,4 | 0,4 | - | - |
| Proxel | 0,2 | 0,2 | - | - |
| ethylene glycol | - | - | 13 | 13 |
| diethylene glycol | - | - | 13 | 13 |
| PEG400 | - | - | 5 | 5 |
| Glycerin | - | - | 15 | 15 |
| Guar Gum | - | - | 3 | 3 |
| 1,4-Bu(OH)2 | - | - | 4 | 4 |
| Acid reg agents | - | - | 5 | 5 |
| water | 43,18 | 43,18 | 27 | 27 |

Next to the ink compositions INK-19 and INK-20 as in the above mentioned article, two inks (INK-17 & INK-18) were made with the same water-soluble organic solvents and surfactants as the inks of Table 7 . The composition of these inks can also be found in Table 11.

The results of the inks made with synthetic and natural indigo according to the above mentioned article can be observed in Table 12. In contrast to the article, the particle sizes of the indigo pigment were too high to guarantee reliable jetting behaviour when used in aqueous inkjet inks. The viscosity of the inks was extremely high which almost leads to gelling of the liquid and hence unsuitable for ink jetting. Therefore, a polymeric dispersant according to the invention is necessary to stabilize the indigo particles and to be able to use these formulations in a high performing inkjet ink.

Table 12: Particle size of indigo pigment particles and viscosity of comparative aqueous inks.

| Type of indigo | INK | Particle size (nm) | visco | pH |
|---|---|---|---|---|
| SI | INK-17 | 558 | 1858 | 8,67 |
| NI | INK-18 | 749 | 1143 | 9,02 |
| SI | INK-19 | 671 | GEL | 8,55 |
| NI | INK-20 | 679 | 3785 | 8,35 |

## Claims

**1.** An image recording method comprising the following steps:

i) applying an aqueous pre-treatment liquid onto at least a part of a recording region S of a surface of a substrate; and

ii) attaching an aqueous inkjet ink onto at least a part of the recording region S, the aqueous inkjet ink comprises indigo pigment particles, a polymeric dispersant and a water-soluble organic solvent, the indigo pigment particles have an average particle size equal to 30 nm or more and equal to 1000 nm or less, the polymeric dispersant is a block co-polymer having an average molecular weight equal to 1.2 kDa or more and comprises a hydrophobic block and a hydrophilic block, the hydrophobic block is selected from the group consisting of (methyl)styrene, lignin, vinyl pyridine, tris (1-phenylethyl)phenyl-group, arylethylphenyl-group, acrylate-based group, methyl (meth)acrylate, n-butyl (meth)acrylate, lauryl (meth)acrylate and myristyl (meth)acrylate , the hydrophilic block is selected from the group consisting of ethylene glycol, propylene glycol, (meth)acrylic acid, polyethyleneoxy functional (meth)acrylate, sulfonic acid, sulfate, salts of carboxylic acid, polyoxyethylene ethers of carboxylic

acid, alkylphenol alkoxylate, sulphonate and phosphonate.

2. The image recording method according to Claim 1 wherein the indigo pigment particles originate from indigo bulk material containing particles having a BET specific surface equal to 20 $m^2$ / g or more.

3. The image recording method according to any of the preceding claims wherein the indigo pigment is a bio-based pigment.

4. The image recording method according to any of the preceding claims wherein the polymeric dispersant has an aromatic group content equal to 30 mol.% or less.

5. The image recording method according to any of the preceding claims wherein the aqueous pre-treatment liquid comprises a reducing compound.

6. The image recording method according to any of the preceding claims wherein the aqueous pre-treatment liquid comprises a fixing agent selected from the group consisting of a multivalent metal salt, a cationic polymer and an organic acid.

7. The image recording method according to any of the preceding claims wherein the indigo pigment particles are polymeric dispersant composite particles having an acid value of not more than 220 mg KOH/g polymeric dispersant.

8. The image recording method according to any of the preceding claims wherein the polymeric dispersant is crosslinked.

9. The image recording method according to any of the preceding claims wherein the substrate has an absorbability of 10 ml/$m^2$ or less of water within a 30 $ms^{1/2}$ from the start of contacting the water according to Bristow method.

10. The image recording method according to any of the preceding claims wherein the substrate is a cardboard liner.

11. An ink set comprising a first aqueous ink and a second aqueous ink, the first ink comprises bio-based indigo pigment particles, a dispersing agent and a water-soluble organic solvent, the dispersing agent is a block co-polymer having an average molecular weight equal to 1.2 kDa or more and comprises a hydrophobic block and a hydrophilic block, the hydrophobic block is selected from the group consisting of (methyl)styrene, lignin, vinyl pyridine, tris (1-phenylethyl) phenyl-group, arylethylphenyl-group, acrylate-based group, methyl (meth)acrylate, n-butyl (meth)acrylate, lauryl (meth)acrylate and myristyl (meth)acrylate , the hydrophilic block is selected from the group consisting of ethylene glycol, propylene glycol, (meth)acrylic acid, polyethyleneoxy functional (meth)acrylate, sulfonic acid, sulfate, salts of carboxylic acid, polyoxyethylene ethers of carboxylic acid, alkylphenol alkoxylate, sulphonate and phosphonate, the second aqueous ink comprises a water-soluble organic solvent and a pigment selected from the group consisting of a yellow pigment, a magenta pigment and a black pigment.

12. The ink set according to Claim 11 wherein the indigo pigment particles originate from indigo bulk material containing particles of the bulk indigo pigment having a BET specific surface equal to 20 $m^2$ / g or more.

13. The ink set according to Claim 11 or Claim 12 wherein the polymeric dispersant has an aromatic content equal to 30 mol.% or less.

14. The ink set according to Claim 11 to Claim 13 wherein the indigo pigment particles are polymeric dispersant composite particles having an acid value of not more than 220 mg KOH/g polymeric dispersant.

15. The ink set according to Claim 11 to Claim 14 wherein the polymeric dispersant is crosslinked.

Europäisches Patentamt
European Patent Office
Office européen des brevets

# EUROPEAN SEARCH REPORT

Application Number
EP 24 20 5190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Wonkyoung Lee ET AL: "Performance Evaluation of Ink and Digital Textile Printing Fabric Using Natural Indigo ¦ Fibers and Polymers", , 8 March 2023 (2023-03-08), XP093260095, Retrieved from the Internet: URL:https://link.springer.com/article/10.1007/s12221-023-00137-4 * the whole document * ----- | 1-15 | INV. C09D11/322 C09D11/326 C09D11/106 C09D11/107 C09D11/104 C09D11/40 C09D11/52 C09D11/38 D06P5/30 |
| A | US 2023/374327 A1 (MIZOE TAIGA [JP] ET AL) 23 November 2023 (2023-11-23) * claims; examples * ----- | 1-15 | |
| A | EP 3 543 301 A1 (SEIKO EPSON CORP [JP]) 25 September 2019 (2019-09-25) * claims; examples * ----- | 1-15 | |

TECHNICAL FIELDS SEARCHED (IPC)

C09D
D06Q
D06P

The present search report has been drawn up for all claims

| Place of search | Date of completion of the search | Examiner |
|---|---|---|
| Munich | 18 March 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

1

EPO FORM 1503 03.82 (P04C01)

# ANNEX TO THE EUROPEAN SEARCH REPORT ON EUROPEAN PATENT APPLICATION NO.

EP 24 20 5190

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | Publication date |
|---|---|---|---|
| US 2023374327 A1 | 23-11-2023 | CN 116802238 A | 22-09-2023 |
| | | EP 4289908 A1 | 13-12-2023 |
| | | JP WO2022168738 A1 | 11-08-2022 |
| | | US 2023374327 A1 | 23-11-2023 |
| | | WO 2022168738 A1 | 11-08-2022 |
| EP 3543301 A1 | 25-09-2019 | CN 110294977 A | 01-10-2019 |
| | | EP 3543301 A1 | 25-09-2019 |
| | | JP 7310093 B2 | 19-07-2023 |
| | | JP 2019167451 A | 03-10-2019 |
| | | US 2019292391 A1 | 26-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2024030442 A
- EP 16196224
- US 2009227711 A
- JP 2004075759 B
- WO 2015158649 A
- WO 2016165970 A
- JP 2008150507 B


### Non-patent literature cited in the description


- *Fibers and Polymers*, 2023, vol. 24, 1309-1319
- *CHEMICAL ABSTRACTS*, 91629-35-5
- **HERBST, WILLY et al.** Industrial Organic Pigments, Production, Properties, Applications.. Wiley - VCH, 2004
- **JONGHOON KIM et al.** Performance Evaluation of Ink and Digital Textile Printing Fabric Using Natural Indigo. *Fibers and Polymers*, 2023, vol. 24, 1309-1319